# EUROPÄISCHE PATENTSCHRIFT

(11) **EP 1 795 383 B1**
(45) Veröffentlichungstag und Bekanntmachung des Hinweises auf die Patenterteilung: **19.08.2009**
(21) Anmeldenummer: 06125374.6
(22) Anmeldetag: 05.12.2006
(51) Int. Cl.: B60D 1/02, F16B 21/12

(54) **Zugelement**
Tension member
Elément de traction

(30) Priorität: 09.12.2005 DE 102005058811
(43) Veröffentlichungstag der Anmeldung: 13.06.2007
(73) Patentinhaber: Deere & Company, Moline, IL 61265-8098 (US)
(72) Erfinder: Heitlinger, Martin, 76684, Östringen (DE); Patino, Mario, 67061, Ludwigshafen (DE)
(74) Vertreter: Magin, Ludwig Bernhard

(56) Entgegenhaltungen:
- DE-A1- 1 630 585
- DE-A1- 10 322 933
- DE-B- 1 145 494
- FR-A- 2 200 797
- US-A1- 2 509 459
- US-A1- 3 685 864

## Beschreibung

Die Erfindung betrifft ein Zugelement mit einer oberen Lasche, einer unteren Lasche und einer Verriegelungseinrichtung. Zwischen den zwei Laschen ist ein Zwischenraum zur Aufnahme einer Zugöse ausgebildet, wobei an der oberen und unteren Lasche je eine Aufnahmebohrung vorgesehen ist, die der Aufnahme eines Anhängebolzens dient. Die Verriegelungseinrichtung weist ein eine Bohrung enthaltendes Bauteil und einen in der Bohrung axial verschiebbaren Sicherungsbolzen auf. Die Verriegelungseinrichtung ist derart an einer Lasche angeordnet, dass im verriegelten Zustand ein aus der Bohrung ragender Bolzenabschnitt des Sicherungsbolzens in die Bewegungsbahn des Anhängebolzens eingreift und diesen an einer axialen Verschiebung hindert.

Aus dem Stand der Technik ist beispielsweise ein gattungsgemäßes Zugelement aus der DE 103 22 933 A1 der Anmelderin bekannt. Im Hinblick auf die dort offenbarte Verriegelungseinrichtung, welche ein Bauteil mit einer Bohrung und einen in der Bohrung axial verschiebbaren Sicherungsbolzen enthält, sowie auf die dort offenbarte Zusammenwirkung dieser Bauteile untereinander wird auf DE 103 22 933 A1 verwiesen, wobei der gesamte Offenbarungsgehalt dieser Offenlegungsschrift hiermit explizit mit einbezogen wird.

Die in den Fig. 2 und 3 der DE 103 22 933 A1 offenbarte Verriegelungseinrichtung betrifft im Konkreten eine Anwendung für ein Zugpendel, welches bei landwirtschaftlichen Arbeitsgeräten, und insbesondere bei Traktoren eingesetzt wird. Der dort offenbarte Sicherungsbolzen weist ein schlaufenförmiges Federelement auf, das im Wesentlichen derart ausgelegt ist, dass ein unbeabsichtigtes axiales Verschieben in der Bohrung des Bauteils verhinderbar ist. Dieses Federelement ist insbesondere nicht dafür ausgelegt, eine in axialer Richtung des Sicherungsbolzens wirkende Kraft, welche den Sicherungsbolzen in eine den Anhängebolzen freigebende Stellung verbringen kann, standzuhalten. Falls also eine solche Kraft auf den Sicherungsbolzen einwirkt, beispielsweise durch einen äußeren Gegenstand verursacht, könnte dieser in die freigebende Stellung verbracht werden (und könnte hierbei beispielsweise das Federelement verbiegen), was ein Lösen des Anhängebolzens zur Folge haben könnte. Hierdurch besteht für das Zugelement ein verbleibendes Sicherheitsrisiko, nämlich dass ein an dem Zugelement angekoppelten Zugöse gelöst werden könnte, so dass ein an einem Fahrzeug mit Hilfe des Zugelements angekoppelter Anhänger verloren gehen kann und beispielsweise einen Unfall verursachen kann. Um dies zu vermeiden, könnte das Federelement entsprechend stabil ausgebildet werden, was allerdings die Bedienung der Verriegelungseinrichtung erheblich erschweren würde. Alternativ könnte eine völlig andere Verriegelungseinrichtung als die, welche in DE 103 22 933 A1 offenbart ist, eingesetzt werden, welche jedoch dann andere bedienungs- und sicherheitsrelevante Eigenschaften aufweist.

Die der Erfindung zugrunde liegende Aufgabe wird darin gesehen, ein Zugelement der eingangs genannten Art anzugeben, durch welches die vorgenannten Probleme gelöst werden. Insbesondere soll ein Zugelement der eingangs genannten Art angegeben und weitergebildet werden, mit welchem die Wahrscheinlichkeit zum unbeabsichtigten Lösen des Anhängebolzens weiter verringert werden kann.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Das Zugelement umfasst ein Mittel, das derart relativ zur Verriegelungseinrichtung angeordnet ist, dass damit ein - insbesondere durch äußere Gegenstände verursachtes - Verbringen des Sicherungsbolzens in eine freigegebene Stellung verhinderbar ist.
Es ist zunächst erkannt worden, dass es nicht unbedingt erforderlich ist, die Verriegelungseinrichtung derart zu modifizieren, dass diese einer in axialer Richtung des Sicherungsbolzen wirkenden Kraft, welche den Sicherungsbolzen in eine den Anhängebolzen freigebende Stellung verbringen kann, standhalten kann. Vielmehr ist ein Mittel vorgesehen, mit welchem ein Gegenstand erst gar nicht auf den Sicherungsbolzen einwirken kann, da das Mittel den Sicherungsbolzen sozusagen dadurch schützt, dass der Gegenstand nicht auf den Sicherungsbolzen auftreffen bzw. zur Anlage kommen kann. Daher können in ganz besonders vorteilhafter Weise insbesondere die vorteilhaften Eigenschaften der in der DE 103 22 933 A1 offenbarten Verriegelungseinrichtung genutzt werden, ohne diese wesentlich zu verändern. Darüber hinaus kann in ganz besonders vorteilhafter Weise ein geringes Sicherheitsrisiko für ein unbeabsichtigtes Lösen eines an dem Zugelement adaptierten Anhängers erzielt werden.

So könnte in einer bevorzugten Ausführungsform an der Lasche, an welcher die Verriegelungseinrichtung vorgesehen ist, ein Vorsprung derart vorgesehen ist, dass bezogen auf die Längsrichtung des Sicherungsbolzens bzw. auf die Bohrungsachse der Vorsprung zumindest teilweise, vorzugsweise vollständig, die Querschnittsfläche der Bohrung oder das Sicherungsbolzenende überdeckt. Mit anderen Worten ist der Vorsprung derart ausgebildet, dass die lotrechte Projektion des Vorsprungs zumindest teilweise oder vollständig die Querschnittsfläche der Bohrung überdeckt. Die Projektion könnte auch in Richtung der Bohrungsachse erfolgen. Jedenfalls ist der Vorsprung bzw. das Mittel derart ausgebildet, dass beispielsweise ein Zugelement, an welchem keine Zugöse adaptiert ist, bei einer Rückwärtsfahrt des Fahrzeugs mit dem Zugelement mit einem Gegenstand (beispielsweise einem Ast oder Zaunteil) in Kontakt kommen kann, wobei dieser Gegenstand aufgrund des Mittels bzw. des Vorsprungs nicht unmittelbar auf den Sicherungsbolzen einwirken kann. Im Konkreten könnte der Vorsprung durch ein einteilig an der Lasche vorgesehenes Metallteil aufweisen. Weiterhin wäre denkbar, dass der Vorsprung in Form eines an der Lasche befestigbares Bauteil ausgebildet ist. Vorzugsweise ist der Vorsprung an einer bezogen zu dem Anbauort des Anhängebolzens abgewandten bzw. gegenüberliegenden Seite des Bauteils vorgesehen.

In einer ganz besonders bevorzugten Ausführungsform ist der Anhängebolzen derart ausgebildet, dass bezogen auf die Längsrichtung des Sicherungsbolzens ein Teil des Anhängebolzens zumindest teilweise, vorzugsweise vollständig, die Querschnittsfläche der Bohrung oder das Sicherungsbolzenende überdeckt. Demgemäß ist an der Lasche nicht unbedingt ein Vorsprung oder dergleichen vorzusehen. Das Mittel ist vielmehr durch eine entsprechende Ausbildung des Anhängebolzens gebildet, nämlich beispielsweise dadurch, dass der Anhängebolzen in seiner Längsrichtung länger als unbedingt notwendig ausgebildet ist und somit im Wesentlichen eine Funktion übernimmt, welche vergleichbar zu dem an der Lasche vorgesehenen oben erwähnten Vorsprung ist. Im Konkreten könnte der Anhängebolzen sich beispielsweise mit seinem oberen Teil unmittelbar oder mittelbar vor den Sicherungsbolzen erstrecken, vorausgesetzt, dass der Anhängebolzen auch in den hierfür an den Laschen vorgesehenen Aufnahmebohrungen eingeführt ist.

Der Anhängebolzen weist erfindungsgemäß einen in radialer Richtung abragenden Bereich oder einen Kragen auf, welcher eine im Wesentlichen ringförmig ausgebildete Vertiefung aufweist. Der Sicherungsbolzen weist an seinem dem Anhängebolzen zugewandten Teil oder Ende eine Vertiefung oder eine Nut auf, welche mit dem Bereich bzw. dem Kragen des Anhängebolzens in Eingriff kommt. Hierdurch kann eine schrittweise Bewegung des Sicherungsbolzens in eine freigegebene Stellung auf Grund des Slip-Stick-Effekts vermieden werden, welcher durch Fahrzeugbewegungen und/oder Vibrationen hervorgerufene einzelne Kontakte zwischen Anhängebolzen und Sicherungsbolzen auftretenden kann. Falls nämlich der Anhängebolzen mit dem Sicherungsbolzen in Kontakt kommt, kommt die Vertiefung bzw. Nut an dem Sicherungsbolzen in die Vertiefung an dem radial abragenden Bereich bzw. Kragen zum gegenseitigen Eingriff, so dass die Bewegungsfreiheit des Sicherungsbolzens in seiner Bohrung auf Grund der Anordnung der Vertiefung und der Nut begrenzt ist. Hierdurch kann in ganz besonders vorteilhafter Weise die Wahrscheinlichkeit eines unbeabsichtigten Lösens einer Zugelement-Zugösen-Verbindung verringert werden.

Der Sicherungsbolzen könnte an seinem dem Anhängebolzen abgewandten Ende im Wesentlichen vierkantförmig ausgebildet sein. Eine Seite dieses vierkantförmig ausgebildeten Endes kommt hierbei an einem Bauteil oder an der Lasche zur Anlage, so dass ein Verdrehen des Sicherungsbolzens um seine Längsachse auf Grund der vierkantförmigen Ausgestaltung dieses Endes vermieden wird. Hierdurch kann auch eine Belastung des Federelements durch ein auf das Federelement übertragenes Drehmoment weitgehend vermieden werden. Eine Drehung des Sicherungsbolzens um seine Längsachse könnte dann auftreten, wenn der in den Aufnahmebohrungen befindliche Anhängebolzen selbst nicht gegen Verdrehung gesichert ist und bei einem eventuellen Verdrehen (beispielsweise bei einer Kurvenfahrt des Gespanns) mit dem Sicherungsbolzen in Kontakt kommt.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: einen aus dem Stand der Technik bekannter Sicherungsbolzen mit einem Bolzenelement und einem Federelement,
- Fig. 2: ein aus dem Stand der Technik bekanntes Zugpendelende mit einer Verrieglungseinrichtung für den Anhängebolzen im nicht verriegelten Zustand,
- Fig. 3: ein aus dem Stand der Technik bekanntes Zugpendelende mit einer Verrieglungseinrichtung für den Anhängebolzen im verriegelten Zustand,
- Fig. 4: eine perspektivische Ansicht von der Seite und teilweise von oben eines ersten erfindungsgemäßen Ausführungsbeispiels eines Zugelements und
- Fig. 5: eine perspektivische Ansicht von oben und teilweise von der Seite eines zweiten erfindungsgemäßen Ausführungsbeispiels eines Zugelements.

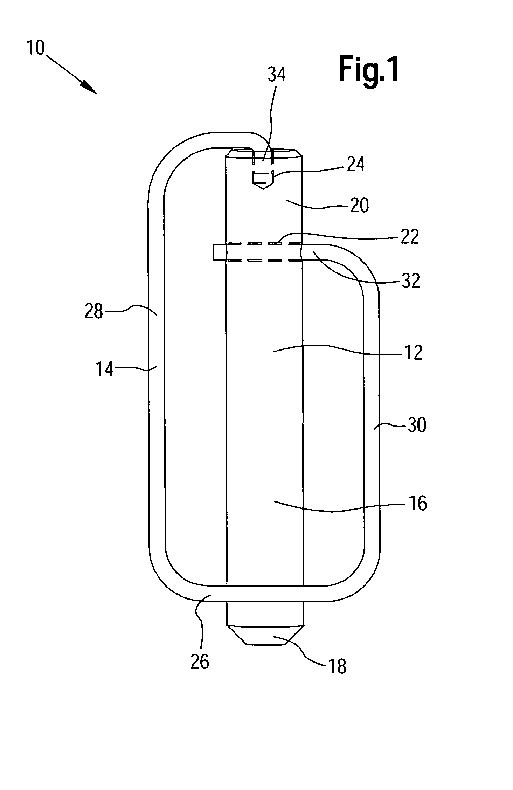

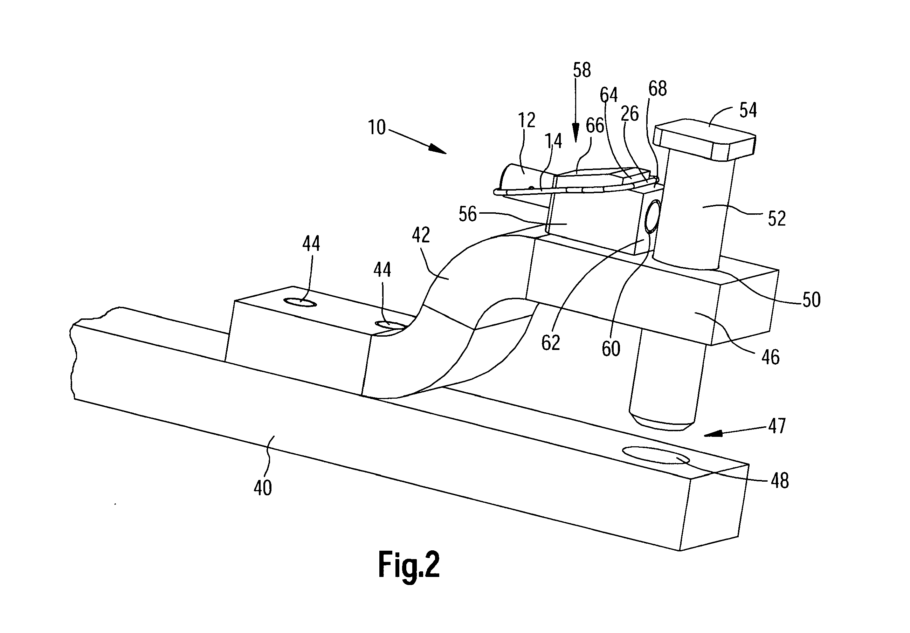

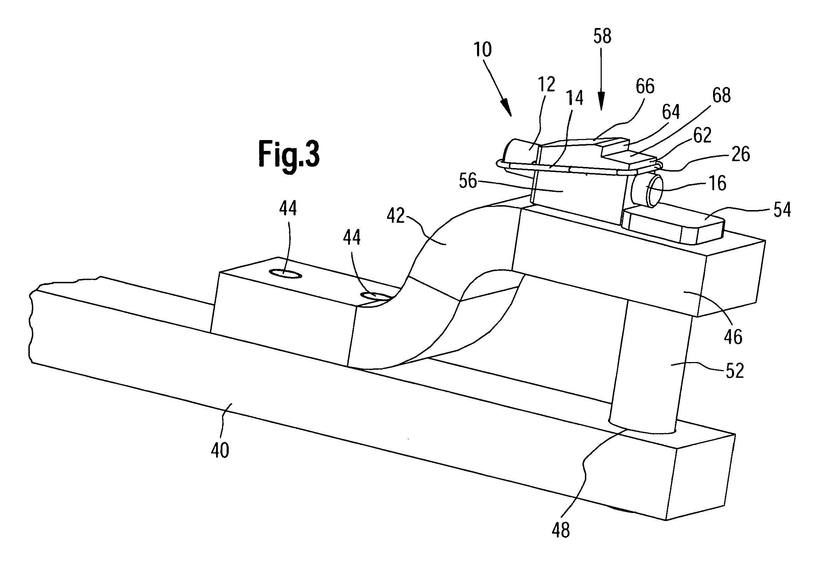

Aus Fig. 1 geht ein Sicherungsbolzen 10 hervor, der aus einem Bolzenelement 12 und einem Federelement 14 besteht. Das Bolzenelement 12 ist ein zylindrischer Vollkörper, der einen in eine Bohrung (60, Fig. 2 und 3) einsteckbaren Schaftabschnitt 16 enthält, dessen Ende eine Fase 18 aufweist, die das Einstecken in die Bohrung 60 erleichtert. Im Bereich des dem Schaftabschnitt 16 entgegengesetzten Endes 20 ist in das Bolzenelement 12 eine Querbohrung 22 eingebracht. Des Weiteren befindet sich an diesem Ende 20 eine axial ausgerichtete Stirnbohrung 24, die als Sackbohrung ausgebildet ist.

Das Federelement 14 besteht aus einem Federstahldraht mit Kreisquerschnitt, der im Wesentlichen G-förmig ausgebildet ist. Der Bauch des G bildet eine Schlaufe 26, die gemeinsam mit zwei im Wesentlichen parallelen zueinander verlaufenden Schenkeln 28, 30 U-förmig gebogen ist. Der mittlere horizontal ausgerichtete erste Endschenkel 32 des G wird gebildet, indem der erste Schenkel 30 um ca. 90° nach innen abgebogen ist. Dieser erste Endschenkel 32 greift in die Querbohrung 22 des Bolzenelements 12 ein. Der obere vertikal ausgerichtete zweite Endschenkel 34 des G wird gebildet, indem der zweite Schenkel 28 zweifach um ca. 90° nach innen abgebogen ist. Dieser zweite Endschenkel 34 greift in die Stirnbohrung 24 des Bolzenelements 12 ein. Das Federelement 14 ist derart vorgespannt, dass seine Schlaufe 26 gegen den Schaftabschnitt 16 des Bolzenelements 12 gedrückt wird und sich an diesem abstützt. Indem die Bedienungsperson mit der Hand einen Druck auf die Schlaufe 26 ausübt, lässt sich diese etwas von dem Schaftabschnitt 16 abheben.

Die Fig. 2 und 3 zeigen den Endbereich eines Zugelements, welches in diesen Ausführungsbeispielen in Form eines Zugpendels ausgebildet ist, dessen nicht sichtbares anderes (linkes) Ende an einem Fahrzeugrumpf schwenkbar befestigt ist. Auf dem eigentlichen Zugpendel 40 ist ein Oberteil 42 aufgeschraubt, wobei lediglich die der Verschraubung dienenden Bohrungen 44 gezeigt sind. Das Oberteil 42 weist eine in Seitenansicht S-förmige Form auf, so dass der nicht am Zugpendel 40 festgeschraubte Schenkel 46 zum Zugpendel 40 beabstandet ist und ein Zwischenraum 47 zwischen dem Zugpendel 40 und dem Oberteil 42 ausgebildet ist. Im Bereich der freien (rechten) Enden des Zugpendels 40 und des Oberteils 42 befindet sich je eine senkrecht ausgerichtete als Durchgangsbohrung ausgebildete Aufnahmebohrung 48, 50. Die beiden Aufnahmebohrungen 48, 50 fluchten miteinander und nehmen einen Anhängebolzen 52 auf. Der Anhängebolzen 52 hat an seinem oberen Ende einen flachen Kopf 54, der radial über den zylindrischen Schaft des Anhängebolzens 52 übersteht und im Wesentlichen quadratisch ausgebildet ist, wobei die Ecken des Quadrates abgerundet sind. Der Anhängebolzen 52 dient der Befestigung einer nicht dargestellten Öse, die sich beispielsweise an der Deichsel eines anhängbaren Anhängegerätes befindet.

Auf der Oberseite des Oberteils 42 ist ein Bauteil 56 einer Verriegelungsvorrichtung 58 befestigt. Die Befestigung kann beispielsweise durch Verschrauben oder Verschweißen erfolgen. Es ist jedoch auch möglich das Oberteil 42 und das Bauteil 56 aus einem Stück zu fertigen. Das Bauteil 56 ist im Wesentlichen quaderförmig ausgebildet und enthält eine Bohrung 60, die im Wesentlichen parallel zur Zugpendelausrichtung verläuft. In die Bohrung 60 ist von der dem Anhängebolzen 52 gegenüberliegenden Seite (links) aus, das Bolzenelement 12 des in Fig. 1 näher dargestellten Sicherungsbolzens 10 derart eingesteckt, dass das mit der Fase 18 versehene Schaftende des Bolzenelements 12 dem Anhängebolzen 52 zugewandt ist.

An seinem dem Anhängebolzen 52 zugewandten Ende weist das Bauteil 56 eine im Wesentlichen senkrecht ausgerichtete Frontseite 62 auf, aus der die Bohrung 60 austritt. Der obere Bereich des Bauteils 56 ist stufenförmig ausgebildet, wobei sich eine zur Frontseite 62 parallele und in die gleiche Richtung weisende Stirnseite 64 ergibt. Die Oberseite des Bauteils 56 weist eine schräge Rampe 66 auf, deren Abstand zur Achse der Bohrung 60 ausgehend von der Einsteckseite des Bolzenelements 12 bis zur Stirnfläche stetig ansteigt.

Zur Befestigung der Anhängeöse einer Deichsel an dem Zugpendel 10 wird folgendermaßen verfahren:

Zunächst wird das mit der Fase 18 versehene Schaftende des Bolzenelements 12 (von links) in die Bohrung 60 des Bauteils 56 eingeführt. Dann wird die Schlaufe 26 des Federelements 14 von der Bedienungsperson angehoben und auf die Rampe 66 des Bauteils 56 aufgelegt. Sodann wird das Bolzenelement 12 weiter in die Bohrung 60 eingeschoben. Dabei gleitet die Schlaufe 26 des Federelements 14 auf der Rampe 66 bis die Schlaufe 26 die Stirnseite 64 erreicht und in Richtung Bolzenelement 12 schnappt, wie in Fig. 2 dargestellt. Jetzt lässt sich das Bolzenelement 12 nicht mehr zurückziehen, ohne dass die Schlaufe 26 angehoben wird, was wegen der Höhe der Rampe 66 einen nicht unerheblichen Kraftaufwand erfordert. Damit ist der Sicherungsbolzen 10 unverlierbar am Bauteil 56 festgelegt.

Zum Einfädeln einer nicht dargestellten Anhängeöse wird der Anhängebolzen 52 angehoben und aus der Aufnahmebohrung 48 gezogen, so dass die Anhängeöse in den Zwischenraum 47 eingeführt werden kann. Dabei befindet sich der Sicherungsbolzen 10 in seiner in Fig. 2 dargestellten entriegelten Position, in der das freie Ende des Schaftabschnitts 16 nicht aus dem Bauteil 56 herausragt und keinen Einfluss auf den Anhängebolzen 52 hat. Wenn die Ausnehmung der Anhängeöse mit den Aufnahmebohrungen 48, 50 fluchtet wird der Anhängebolzen 52 nach unten bewegt und durch die Anhängeöse in die Aufnahmebohrung 48 eingesteckt. Der Kopf 54 des Anhängebolzens 52 liegt dann auf der Oberseite des Schenkels 46 des Oberteils 42 auf. Damit sich die Anhängeöse nicht ungewollt vom Zugpendel lösen kann, wird der Anhängebolzen 52 in dieser Lage verriegelt. Zu diesem Zweck braucht der Sicherungsbolzen 10 lediglich in Richtung des Anhängebolzens 52 verschoben zu werden, bis die Schlaufe 26 des Federelements 14 wie in Fig. 3 dargestellt hinter die Frontseite 62 des Bauteils 56 schnappt. Das freie Ende des Schaftabschnitts 16 gleitet dabei über die obere Fläche des Kopfes 54 des Anhängebolzens 52 und verriegelt den Anhängebolzen 52 in dieser Position.

Wegen der Vorspannung des Federelementes 14 verharrt dieses in seiner in Fig. 3 gezeigten Lage. Um den Anhängebolzen 52 zu entriegeln, muss die Bedienungsperson mit einer gewissen Kraftanstrengung gegen die Federkraft die Schlaufe 26 des Federelementes 14 anheben und auf die zwischen der Frontseite 62 und der Stirnseite 64 ausgebildete Fläche 68 des Bauteils 56 auflegen. Nun lässt sich der Sicherungsbolzen 10 zurückziehen, bis die Schlaufe 26 des Federelements 14 die Stirnseite 64 erreicht und das freie Ende des Schaftabschnitts 16 in die Bohrung 60 eingezogen ist und nicht mehr in die Bewegungsbahn des Kopfes 54 des Anhängebolzens 52 eingreift. Der Anhängebolzen 52 lässt sich jetzt nach oben herausziehen, wodurch die Anhängeöse freigegeben wird.

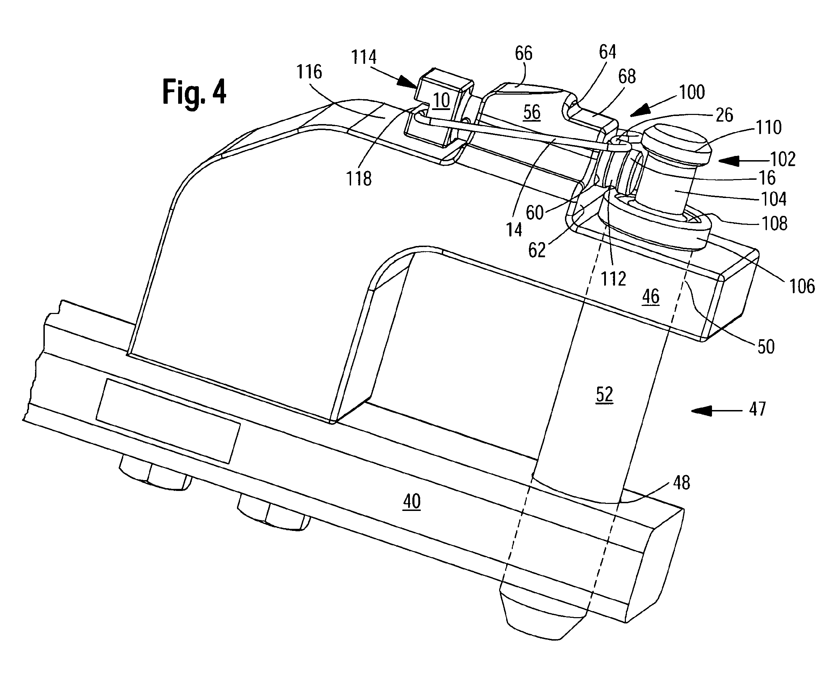

Fig. 4 zeigt in einer perspektivischen Ansicht ein erstes erfindungsgemäßes Ausführungsbeispiel eines Zugelements. Das in Fig. 4 gezeigte Zugelement ist eine alternative Ausführung zu dem in den Fig. 2 und 3 gezeigten Zugpendelende. Auch bei dem Zugelement aus Fig. 4 ist eine untere Lasche 40 mit einer Aufnahmebohrung 48 und eine obere Lasche 46 mit einer Aufnahmebohrung 50 vorgesehen. In die Aufnahmebohrungen 48, 50 kann der Anhängebolzen 52 eingeführt werden, um damit eine (in Fig. 4 nicht gezeigte) Zugöse eines Anhängers an dem Zugelement zu fixieren bzw. zu koppeln. An der oberen Lasche 46 ist eine Verriegelungseinrichtung 100 vorgesehen, welche eine Bohrung 60 aufweist, in der der Sicherungsbolzen 10 eingeführt ist.

Es ist ein Mittel 102 vorgesehen, welches derart relativ zur Verriegelungseinrichtung 100 angeordnet ist, dass damit ein Verbringen des Sicherungsbolzens 10 in eine freigegebene Stellung verhinderbar ist. Im Konkreten umfasst das Mittel 102 ein schaftförmiges oder zapfenförmiges Bauteil 104, welches letztendlich eine Verlängerung des Anhängebolzens 52 nach oben darstellt. Das Bauteil 104 ist derart angeordnet, dass es benachbart zu bzw. in räumlicher Nähe zu dem endseitigen Schaftabschnitt 16 des Sicherungsbolzens 10 angeordnet ist. Somit verdeckt das Bauteil 104 nahezu vollständig die Querschnittsfläche der Bohrung 60 der Verriegelungseinrichtung 100 und zwar in dem Sinn, dass in Richtung der Längsachse des Sicherungsbolzens 10 die Querschnittsfläche des Bauteils 104 auf die Querschnittsfläche der Bohrung 60 projizierbar ist und hierbei die Überdeckung vorliegt. Daher wird durch die in Längsrichtung des Anhängebolzens 52 verlängerte Ausgestaltung des Anhängebolzens 52 der endseitige Schaftbereich 16 des Sicherungsbolzens 10 von unmittelbaren Einwirkungen externer Gegenstände geschützt.

Der Anhängebolzen 52 umfasst einen kreisförmig ausgebildeten Kragen 106, dessen untere Seite auf der obere Seite der oberen Lasche 46 zur Anlage kommt, falls der Anhängebolzen 52 in den Aufnahmebohrungen 48, 50 eingeführt ist. Der Kragen 106 weist eine Vertiefung 108 auf, welche im Wesentlichen ringförmig bezüglich der Längsachse des Anhängebolzens 52 ausgebildet ist. An dem oberen Ende des Anhängebolzens 52 ist ein Schulterteil 110 vorgesehen, welches einen größeren Außenradius als das Bauteil 104 aufweist. Das Schulterteil 110 dient vor allem zur einfachen Handhabung des Anhängebolzens 52, dieser kann nämlich hierdurch in einfacher Weise von einem Bediener gegriffen werden, insbesondere zum Herausziehen des Anhängebolzens 52.

An dem endseitigen Schaftbereich 16 des Sicherungsbolzens 10 ist an der längsseitigen Oberfläche eine Vertiefung bzw. eine Nut 112 vorgesehen. Die Nut 112 des endseitigen Schaftbereichs 16 des Sicherungsbolzens 10 kommt unter Umständen mit dem Kragen 106 des Anhängebolzens 52 wiederholt in Kontakt, falls nämlich eine in den Figuren nicht gezeigte Zugöse auf Grund von Fahrbewegungen den Anhängebolzen 52 in seiner Längsrichtung (und wenn auch nur über kleine Wege) bewegt. Durch die vorgesehene Vertiefung 108 weist der Kragen 106 eine Struktur auf, welche im Wesentlichen komplementär zur Nut 112 des Sicherungsbolzens 10 ausgebildet ist und unmittelbar mit der Nut 112 zur Anlage bzw. zum Eingriff kommt. Auf Grund dieser Ausbildung des endseitigen Bereichs des Sicherungsbolzens 10 in Zusammenwirkung mit dem Kragen 106 kann eine schrittweise Bewegung des Sicherungsbolzens 10 in eine freigegebene Stellung (eine Bewegung nach links innerhalb der Bohrung 16 aus Fig. 4) verhindert werden, so dass der Anhängebolzen 52 während des Betriebs eben nicht unbeabsichtigt sich durch Slip-Stick-Effekt nach oben in eine freigegebene Stellung bewegt werden kann.

Der Sicherungsbolzen 10 weist an seinem dem Anhängebolzen 52 abgewandten Ende ein vierkantförmiges Ende 114 auf, welches mit der Oberfläche 116 der oberen Lasche 46 zur Anlage kommt. Durch das vierkantförmige Ende 114 ist daher der Sicherungsbolzen 10 vor einer Verdrehung bezüglich seiner Längsachse gesichert, so dass eine eventuelle Drehung des Anhängebolzens 52 um seine Längsachse bei unmittelbarem Kontakt mit dem endseitigen Schaftbereich 16 des Sicherungsbolzens 10 kein Drehmoment auf den Sicherungsbolzen überträgt und somit das Federelement 14 nicht durch Verkanten an dem Bauteil 56 der Verriegelungseinrichtung 100 verformt wird. An der Stirnseite des vierkantförmigen Endes 114 ist eine Rille 118 vorgesehen, welche den an dem Ende 114 vorgesehenen Teil des Federelements 14 vor Verformung oder Zerstörung schützt, falls nämlich ein Bediener den Sicherungsbolzen 10 an dem Ende 114 mit einem Hammer in die verriegelte Stellung (wie in Fig. 4 gezeigt) verbringen möchte.

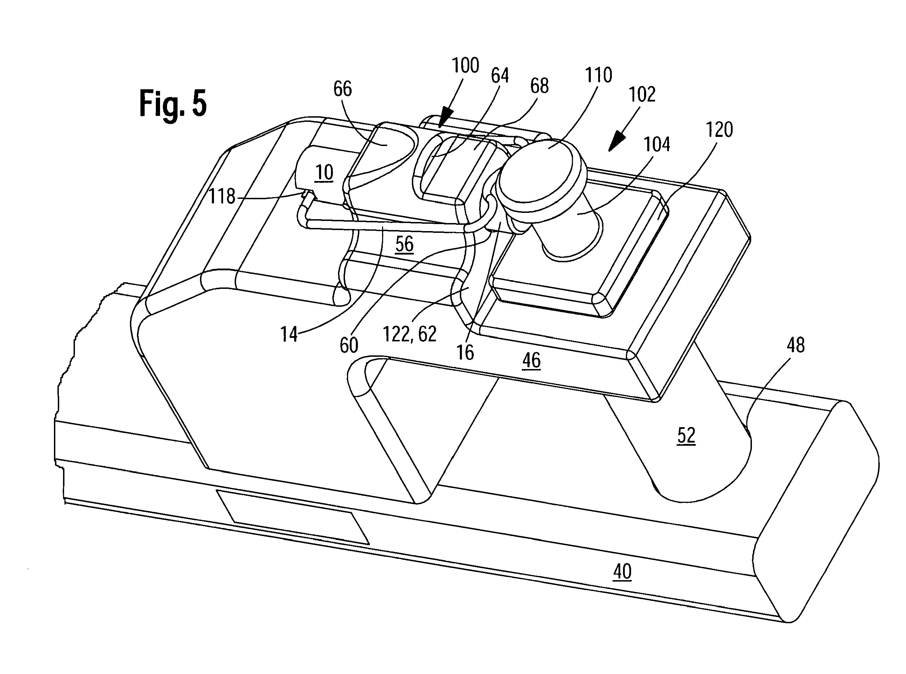

Fig. 5 zeigt in einer perspektivischen Ansicht ein zweites erfindungsgemäßes Ausführungsbeispiel eines Zugelements, welches im Wesentlichen ähnlich zu dem Ausführungsbeispiel aus Fig. 4 ausgeführt ist. Der Anhängebolzen 52 weist einen im Wesentlichen rechteckförmige ausgebildeten und in radialer Richtung abragenden (kragenförmigen) Bereich 120 auf, welcher mit einer Kantenfläche an der Oberfläche 122 des Bauteils 56 bzw. der oberen Lasche 46 zur Anlage kommt und daher verdrehsicher gegenüber der oberen Lasche 46 in den Aufnahmebohrungen 48, 50 aufgenommen ist. Der Sicherungsbolzen 10 weist in Fig. 5 an seinem endseitigen Schaftbereich 16 keine Nut auf. Eine vergleichbar zu Fig. 4 vorgesehenen Nut 112 könnte allerdings auch hier vorgesehen sein. Dementsprechend könnte auch an dem Bereich 120 eine Vertiefung (im Wesentlichen rechteckförmig ausgebildet) vorgesehen sein, so dass auch hierdurch ein unbeabsichtigtes Verbringen des Sicherungsbolzens 10 in eine freigegebene Stellung verhinderbar ist.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten.

## Patentansprüche

1. Zugelement mit einer oberen Lasche (46), einer unteren Lasche (40) und einer Verriegelungseinrichtung (100), wobei zwischen den zwei Laschen (46, 40) ein Zwischenraum (47) zur Aufnahme einer Zugöse ausgebildet ist, wobei an der oberen und unteren Lasche (40, 46) je eine Aufnahmebohrung (48, 50) vorgesehen ist, die der Aufnahme eines Anhängebolzens (52) dient, wobei die Verriegelungseinrichtung (100) ein eine Bohrung (60) enthaltendes Bauteil (56) und einen in der Bohrung (60) axial verschiebbaren Sicherungsbolzen (10) aufweist, wobei die Verriegelungseinrichtung (100) derart an einer Lasche (46) angeordnet ist, dass im verriegelten Zustand ein aus der Bohrung (60) ragender Bolzenabschnitt (16) des Sicherungsbolzens (10) in die Bewegungsbahn des Anhängebolzens (52) eingreift und diesen an einer axialen Verschiebung hindert, wobei mindestens ein Mittel (102) vorgesehen und derart relativ zur Verriegelungseinrichtung (100) angeordnet ist, dass damit ein insbesondere durch äußere Gegenstände verursachtes Verbringen des Sicherungsbolzens (10) in eine freigegebene Stellung verhinderbar ist,
**dadurch gekennzeichnet,**
**dass** der Anhängebolzen (52) einen in radialer Richtung abragenden Bereich (120) oder einen Kragen (106) aufweist, welcher eine im Wesentlichen rechteckförmig oder ringförmig ausgebildete Vertiefung (108) aufweist, wobei der Sicherungsbolzen (10) an seinem dem Anhängebolzen (52) zugewandten Teil eine Vertiefung oder eine Nut (112) aufweist, welche mit dem Bereich (120) oder dem Kragen (106, 108) in Eingriff kommt.

2. Zugelement nach Anspruch 1,
**dadurch gekennzeichnet,**
**dass** an der Lasche (46), an welcher die Verriegelungseinrichtung (100) vorgesehen ist, ein Vorsprung derart vorgesehen ist, dass der Vorsprung, bezogen auf die Längsrichtung des Sicherungsbolzens (10), zumindest teilweise die Querschnittsfläche der Bohrung (60) überdeckt.

3. Zugelement nach Anspruch 2,
**dadurch gekennzeichnet,**
**dass** der Vorsprung vollständig die Querschnittsfläche der Bohrung (60) überdeckt.

4. Zugelement nach einem der Ansprüche 1 bis 3,
**dadurch gekennzeichnet,**
**dass** der Anhängebolzen (52) derart ausgebildet ist, dass ein Teil (104) des Anhängebolzens (52), bezogen auf die Längsrichtung des Sicherungsbolzens (10), zumindest teilweise die Querschnittsfläche der Bohrung (60) überdeckt.

5. Zugelement nach Anspruch 4,
**dadurch gekennzeichnet,**
**dass** der Teil (104) des Anhängebolzens (52) vollständig die Querschnittsfläche der Bohrung (60) verdeckt.

6. Zugelement nach einem der Ansprüche 1 bis 5,
**dadurch gekennzeichnet,**
**dass** der Sicherungsbolzen (10) an seinem dem Anhängebolzen (52) abgewandten Ende (114) im Wesentlichen vierkantförmig ausgebildet ist.

## Claims

1. Towbar element with an upper bracket (46), a lower bracket (40) and a locking device (100), wherein an intermediate space (47) for receiving a towbar lug is formed between the two brackets (46, 40), wherein a respective receiving bore (48, 50) is provided on the upper and lower brackets (40, 46), said receiving bore serving to receive a towing bolt (52), wherein the locking device (100) has a component (56) containing a bore (60) and a securing bolt (10) which can be displaced axially in the bore (60), wherein the locking device (100) is arranged on a bracket (46) in such a manner that, in the locked state, a bolt portion (16) of the securing bolt (10) that protrudes from the bore (60) engages in the path of movement of the towing bolt (52) and prevents the latter from being displaced axially, and wherein at least one means (102) is provided and is arranged relative to the locking device (100) in such a manner that the securing bolt (10) can be prevented therewith from being brought, in particular by external objects, into a released position, **characterized in that** the towing bolt (52) has a region (120) which protrudes in the radial direction or a collar (106) which has a depression (108) of substantially rectangular or annular design, with that part of the securing bolt (10) which faces the towing bolt (52) having a depression or a groove (112) which comes into engagement with the region (120) or the collar (106, 108).

2. Towbar element according to Claim 1, **characterized in that** a projection is provided on the bracket (46), on which the locking device (100) is provided, in such a manner that the projection at least partially covers the cross-sectional area of the bore (60) with respect to the longitudinal direction of the securing bolt (10).

3. Towbar element according to Claim 2, **characterized in that** the projection completely covers the cross-sectional area of the bore (60).

4. Towbar element according to one of Claims 1 to 3, **characterized in that** the towing bolt (52) is designed in such a manner that a part (104) of the towing bolt (52) at least partially covers the cross-sectional area of the bore (60) with respect to the longitudinal direction of the securing bolt (10).

5. Towbar element according to Claim 4**, characterized in that** the part (104) of the towing bolt (52) completely conceals the cross-sectional area of the bore (60).

6. Towbar element according to one of Claims 1 to 5, **characterized in that that** end (114) of the securing bolt (10) which faces away from the towing bolt (52) is of substantially square design.

## Revendications

1. Elément de traction comprenant une branche supérieure (46), une branche inférieure (40) et un dispositif de verrouillage (100), un espace intermédiaire (47) pour recevoir un oeillet de traction étant réalisé entre les deux branches (40, 46), un alésage de réception (48, 50) étant prévu à chaque fois sur la branche supérieure et sur la branche inférieure (40, 46), lequel sert à recevoir un boulon d'attelage (52), le dispositif de verrouillage (100) présentant un composant (56) contenant un alésage (60) et un boulon de fixation (10) pouvant être déplacé axialement dans l'alésage (60), le dispositif de verrouillage (100) étant disposé sur une branche (46) de telle sorte que dans l'état verrouillé, une portion de boulon (16) du boulon de fixation (10) saillant hors de l'alésage (60) s'engage dans la trajectoire de déplacement du boulon d'attelage (52) et empêche ce dernier de se déplacer axialement, au moins un moyen (102) étant prévu et étant disposé par rapport au dispositif de verrouillage (100) de telle sorte qu'il permette d'éviter un transfert, provoqué notamment par des objets extérieurs, du boulon de fixation (10) dans une position libérée,
**caractérisé en ce que**
le boulon d'attelage (52) présente une région (120) ou un collet (106) saillant dans la direction radiale, qui présente un renfoncement (108) de forme essentiellement rectangulaire ou annulaire, le boulon de fixation (10) présentant sur sa partie tournée vers le boulon d'attelage (52) un renfoncement ou une rainure (112), qui vient en prise avec la région (120) ou le collet (106, 108).

2. Elément de traction selon la revendication 1,
**caractérisé en ce que**
l'on prévoit sur la branche (46) sur laquelle est réalisé le dispositif de verrouillage (100), une saillie telle que la saillie recouvre au moins en partie la surface en section transversale de l'alésage (60), par rapport à la direction longitudinale du boulon de fixation (10).

3. Elément de traction selon la revendication 2,
**caractérisé en ce que**
la saillie recouvre complètement la surface en section transversale de l'alésage (60).

4. Elément de traction selon l'une quelconque des revendications 1 à 3,
**caractérisé en ce que**
le boulon d'attelage (52) est réalisé de telle sorte qu'une partie (104) du boulon d'attelage (52) recouvre au moins en partie la surface en section transversale de l'alésage (60), par rapport à la direction longitudinale du boulon de fixation (10).

5. Elément de traction selon la revendication 4,
**caractérisé en ce que**
la partie (104) du boulon d'attelage (52) recouvre complètement la surface en section transversale de l'alésage (60).

6. Elément de traction selon l'une quelconque des revendications 1 à 5,
**caractérisé en ce que**
le boulon de fixation (10) est réalisé à son extrémité (114) opposée au boulon d'attelage (52) essentiellement avec une forme polygonale.
